# FASCICULE DE BREVET EUROPEEN

(11) **EP 1 476 860 B1**
(45) Date de publication et mention de la délivrance du brevet: **04.05.2011**
(21) Numéro de dépôt: 03718848.9
(22) Date de dépôt: 07.02.2003
(51) Int. Cl.: G08C 19/28, G08C 25/02, H04L 12/18

(54) **Procédé de définition d'un groupe parmi des objets bidirectionnels**
Verfahren zur Definition einer Gruppe zwischen bidirektionalen Objekten
Method for defining a group from among bi-directional objects

(30) Priorité: 11.02.2002 FR 0201631
(43) Date de publication de la demande: 17.11.2004
(73) Titulaire: Somfy SAS, 74300 Cluses (FR)
(72) Inventeur: AUTRET, Capucine, F-74460 Marnaz (FR)
(74) Mandataire: Hirsch & Associés
(86) Numéro de dépôt international: PCT/FR2003/000390
(87) Numéro de publication internationale: WO 2003/069794

(56) Documents cités:
- EP-A- 0 651 119
- WO-A-01/71685
- US-A- 5 797 085
- US-A- 6 028 866

## Description

L'invention concerne le domaine des transmetteurs d'ordres et récepteurs d'ordres, présentant des capacités d'émission et de réception; elle concerne notamment les transmetteurs et récepteurs des systèmes domotiques.

De tels systèmes domotiques sont utilisés pour les produits motorisés ou des automatismes de fermeture ou de protection solaire dans le bâtiment, ou encore pour les commandes de luminaires ou autres. Typiquement, on prévoit un ou plusieurs transmetteurs d'ordres; chaque dispositif à commander - volet roulant, store, luminaire, etc - est associé à un récepteur d'ordres; on peut aussi prévoir qu'un même récepteur d'ordres commande plusieurs dispositifs. Les transmetteurs d'ordres et les récepteurs d'ordres communiquent par radio et utilisent une même fréquence de transmission, ou des fréquences prédéterminées. Pour ces dispositifs, et notamment pour les produits motorisés ou des automatismes de fermeture ou de protection solaire dans le bâtiment, des raisons logistiques nécessitent le plus souvent que l'appariement ne soit pas réalisé à la fabrication, mais plutôt sur chantier, après installation des produits. Diverses solutions d'appariement sont proposées dans l'état de la technique.

Certaines solutions concernent le cas où les transmetteurs d'ordres ne sont capables que d'émettre, et où les récepteurs d'ordres ne sont capables que de recevoir. US-A-4 750 118 ou US-A-6 049 289 sont des exemples de telles solutions. D'autres solutions utilisent des transmetteurs d'ordres et des émetteurs d'ordres capables d'émettre comme de recevoir; on peut notamment citer US-A-4 529 980, ou US-A-5 148 159.

La demande de brevet français FR-A-2 827 414, publiée après la date de priorité de la présente demande, décrit un procédé d'appariement d'émetteur et de récepteur. Dans cette demande, il est proposé de munir le récepteur d'un dispositif matériel ou logiciel de mise en mode d'appariement, ou apprentissage. Quand ce dispositif est activé, le récepteur passe en mode d'appariement. Quand il cesse d'être activé, le module repasse en mode opérationnel. Le dispositif peut être sensible à une coupure momentanée de l'alimentation électrique du récepteur.

Par ailleurs, il est connu de permettre de réinitialiser un opérateur de volet roulant à l'aide d'un fil supplémentaire, susceptible d'être relié à la phase du secteur. Une telle solution est décrite dans FR-A-2 808 834.

US-A-6 028 866, décrit un système de communication dans lequel chaque appareil comprend une identification de communication, qui est affectée en usine ou par l'utilisateur. Pour une constitution de groupes, un appareil central émet un message invitant les appareils à joindre le groupe. A réception du message d'invitation, un appareil répond le cas échéant par un message d'acceptation. L'appareil central stocke une liste des appareils composant le groupe, c'est-à-dire des appareils ayant répondu par un message d'acceptation. Cette procédure de constitution d'un groupe permet l'émission de messages destinés au groupe.

EP-A-0 651 119, décrit un ensemble de transmetteur et récepteurs, et mentionne le problème de l'appariement. L'appariement s'effectue en apprenant un code à un transmetteur à partir d'un autre transmetteur. Les deux transmetteurs sont disposés l'un à côté de l'autre, et le bouton du canal en cause est activé sur chaque transmetteur, en commençant par le transmetteur "enseignant". Cette procédure d'apprentissage des codes de proche en proche est aussi appliquée au récepteur. Le document prévoit d'inhiber la fonction d'enseignement des codes sur certains transmetteurs. Ce document ne propose pas de constituer des groupes parmi les récepteurs.

WO-A-01 71685 divulgue un contrôleur à distance universel, adapté à contrôler diverses unités. Chaque unité contient un enregistrement des diverses informations nécessaires pour permettre au contrôleur de la gérer à distance, avec en particulier un code d'appareil; l'enregistrement est copié dans le contrôleur universel. Ce document propose que le contrôleur interroge successivement les diverses unités qu'il contrôle. Il est proposé de regrouper dans un réseau les différentes unités contrôlées par un contrôleur à distance; WO-A-01 71685 ne détaille pas non plus comment constituer un tel réseau.

US-A-5 797 085, décrit un système de communication dans lequel les différents objets ne sont pas appariés. Au contraire, les objets sont identiques du point de vue de la communication et ne disposent pas d'une adresse unique.

Il existe toujours un besoin d'un procédé permettant de façon simple et fiable de définir parmi une pluralité d'opérateurs un groupe. Un tel procédé devrait conserver sa fiabilité même dans un environnement radio ou réseau chargé - par exemple en présence de produits voisins déjà configurés, ou de produits voisins en cours de configuration.

Dans un mode de réalisation, l'invention propose donc un procédé de définition d'un groupe parmi une pluralité d'objets bidirectionnels, comprenant les étapes de:
(a) application synchrone aux objets du groupe d'un événement initiateur;
(b) envoi d'un message contenant un identifiant de groupe, et
(c) enregistrement par les objets ayant subi l'événement initiateur de l'identifiant de groupe.

Dans un mode de mise en oeuvre, l'application synchrone comprend une action sur une alimentation électrique commune des objets du groupe. Elle peut aussi ou alternativement comprendre l'émission vers les objets d'une commande. Il est avantageux que l'événement initiateur comprenne pour les objets non appariés une action sur une alimentation électrique.

L'étape d'envoi peut être effectuée par un objet ayant subi l'événement initiateur. Dans ce cas, on peut prévoir qu'un objet ayant subi l'événement initiateur procède à l'envoi d'un message contenant un identifiant de groupe s'il ne reçoit pas un tel message dans un intervalle de temps suivant l'événement initiateur.

Dans un autre mode de mise en oeuvre, un objet ayant subi l'événement initiateur n'enregistre l'identifiant de groupe que si le message est reçu dans un intervalle de temps prédéterminé suivant l'événement initiateur. On peut aussi prévoir que le message contenant un identifiant de groupe contient une référence temporelle comptée par rapport à l'événement initiateur. Cette référence temporelle comprend de préférence une indication du temps entre l'événement initiateur et l'envoi du message contenant l'identifiant de groupe. Alternativement, chaque objet est muni d'une horloge interne, et la référence temporelle comprend une indication de la date ou de l'heure de l'événement initiateur.

L'invention propose aussi un programme d'exploitation d'un objet bidirectionnel, comprenant:
(a) une routine de réception d'un événement initiateur;
(b) une routine de réception d'un message et d'extraction d'un identifiant de groupe contenu dans le message, et
(c) une routine d'enregistrement de l'identifiant de groupe.

Dans un mode de réalisation, la routine de réception d'un événement initiateur est apte à détecter des variations de l'alimentation électrique de l'objet. Elle peut aussi être apte à recevoir un message d'initiation.

Le programme peut aussi comprendre une routine d'envoi d'un message contenant un identifiant de groupe. Dans ce cas, il est avantageux que la routine d'envoi soit inhibée par la mise en oeuvre de la routine de réception d'un message.

On peut encore prévoir une routine de calcul du temps à partir de l'exécution de la routine de réception d'un événement initiateur; la routine d'enregistrement n'est alors mise en oeuvre que dans un intervalle de temps prédéterminé. On peut aussi prévoir une routine de calcul du temps à partir de l'exécution de la routine de réception d'un événement initiateur; dans ce cas, la routine de réception d'un message est apte à extraire une référence temporelle du message.

L'invention propose enfin un objet bidirectionnel, présentant :
- un étage de réception;
- un étage d'émission;
- une unité logique pilotant l'étage de réception et l'étage d'émission et
- une mémoire contenant un tel programme.

La présente invention est définie par l'objet des revendications indépendantes.

D'autres caractéristiques et avantages de l'invention apparaîtront à la lecture de la description qui suit, donnée à titre d'exemple et en référence aux dessins qui montrent
- figure 1, une vue schématique d'une installation selon l'invention ;
- figure 2, une vue schématique de la structure logique d'un objet bidirectionnel permettant la mise en oeuvre de l'invention;
- figure 3, un ordinogramme d'un procédé d'appariement utilisant une définition de groupe selon l'invention;
- figure 4, un ordinogramme d'un procédé permettant de sécuriser la définition d'un groupe parmi les objets bidirectionnels;
- figure 5, un ordinogramme d'un autre mode de définition d'un groupe selon l'invention.

Dans la suite de la description, l'invention est décrite dans un exemple d'application à l'appariement de systèmes domotiques; elle ne se limite pas à de tels systèmes; elle peut aussi être utilisée à d'autres fins que l'appariement. On utilise dans la suite les mots "transmetteur d'ordre" et "récepteur d'ordre", pour désigner des objets qui ont pour fonction de transmettre ou recevoir les ordres donnés par un utilisateur; ces désignations ne sont pas représentatives des fonctionnalités des "transmetteurs" ou "récepteurs", qui du point de vue des signaux, sont capables d'émettre comme de recevoir. On aurait donc pu parler "d'objet bidirectionnel", c'est-à-dire d'un objet présentant des capacités d'émission et de réception. Pour la clarté de l'explication, on utilise les mots "transmetteurs" ou "récepteurs" - qui ne représentent que l'affectation d'un objet bidirectionnel donné à un usage particulier.

On suppose aussi, dans la suite de la description que chaque objet bidirectionnel est muni d'un identifiant univoque; il peut s'agir d'un identifiant correspondant à un code de l'objet, donné en usine et qui n'est pas susceptible d'être modifié; il peut aussi s'agir d'un nombre susceptible d'être modifié, comme un nombre aléatoire choisi dans l'objet ou encore un nombre choisi à l'aide de micro-commutateurs. L'origine de l'identifiant est sans incidence sur le fonctionnement du procédé. On notera aussi que l'identifiant utilisé dans la suite peut être modifié après la définition du groupe ou après l'appariement : il sert simplement, lors de l'appariement, à identifier un objet.

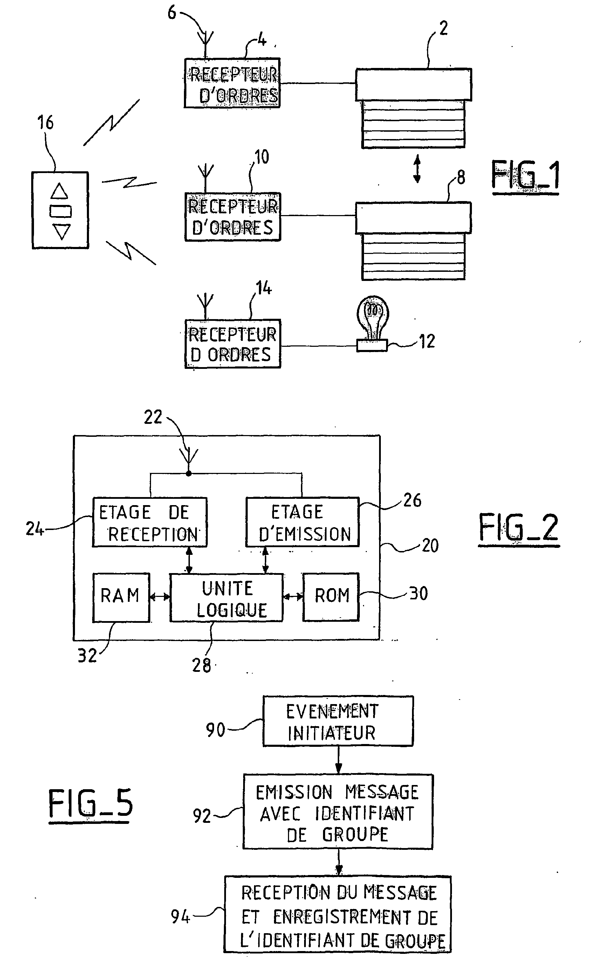

La figure 1 montre une vue schématique d'une installation dans un premier exemple de mise en oeuvre de l'invention. L'installation comprend un opérateur 2. Cet opérateur peut, par exemple enrouler ou dérouler des stores, des volets roulants ou une porte de garage, actionner un luminaire, ouvrir une porte, enclencher ou déclencher une alarme, etc. A l'opérateur est relié un récepteur. Le récepteur d'ordres présente une antenne 6 qui lui permet de recevoir des ordres transmis par voie hertzienne depuis un transmetteur d'ordres; le récepteur d'ordres 4 peut en outre émettre des signaux, par exemple par la voie hertzienne, à l'aide de la même antenne 6. La transmission par radio des ordres depuis un transmetteur vers un récepteur ou dans le sens inverse est connue en soi et n'est pas décrite plus en détail ici.

La figure 1 montre encore une pluralité d'opérateurs 8, 12, ayant chacun leur récepteur d'ordres 10, 14. Elle montre encore un transmetteur d'ordres 16; celui-ci est adapté à transmettre par voie hertzienne un ou des ordres à destination des récepteurs 4, 8, 12, et présente à cette fin une antenne non représentée. Typiquement, un transmetteur d'ordres, dans le cas de la commande d'un volet roulant, peut transmettre des ordres de montée ou de descente du volet ou d'arrêt du volet; on peut prévoir d'autres ordres, comme la mise du volet dans des positions préprogrammées du volet, des ordres de programmation du volet, etc. Le transmetteur d'ordres présente donc un ou plusieurs dispositifs permettant à l'utilisateur d'entrer une commande, dans le cas le plus simple un ou plusieurs boutons de commande. Le transmetteur d'ordres est aussi adapté à recevoir des signaux depuis le ou les récepteurs d'ordres; on peut, comme dans le cas du récepteur d'ordres, utiliser la même antenne.

Ainsi, en fonction de la commande reçue de la part de l'utilisateur, de son programme d'exploitation et/ou des signaux reçus depuis les récepteurs d'ordres, le transmetteur d'ordres émet des signaux, comme expliqué dans la suite.

On peut prévoir pour le transmetteur d'ordres comme pour le récepteur d'ordres des canaux de transmission divers en émission ou en réception; dans une configuration simple, on utilise la radio, le transmetteur comme l'émetteur constituant alors un "transceiver", c'est-à-dire un émetteur-récepteur.

Un besoin qui se pose dans ce cadre est de définir un groupe parmi les différents objets. Ce groupe peut ensuite être utilisé pour sélectionner un objet à apparier, comme décrit dans la demande déposée le même jour par la demanderesse sous le titre "Procédé d'appariement d'objets bidirectionnels". Ce procédé d'appariement utilise une affectation temporaire des récepteurs d'ordres d'un groupe à un transmetteur d'ordres. L'affectation temporaire permet de procéder à un appariement d'un récepteur d'ordres ayant subi l'événement initiateur, même dans un environnement radio chargé, dans lequel des messages nombreux sont transmis.

La figure 2 est une vue schématique de la structure logique d'un objet bidirectionnel utilisé comme transmetteur d'ordres ou comme récepteur d'ordres. Dans l'exemple de la figure, l'objet est un "transceiver" et transmet et reçoit des signaux par voie hertzienne, à l'aide d'une antenne unique. L'objet 20 présente donc une antenne 22, un étage de réception 24, relié à l'antenne; l'étage de réception reçoit les signaux captés par l'antenne 22. Il présente aussi un étage d'émission 26, lui aussi relié à l'antenne 22, qui transmet à l'antenne des signaux à émettre. L'étage d'émission et l'étage de réception sont commandés par une unité logique 28, comme un microprocesseur, qui est capable d'exécuter un programme stocké dans une mémoire 30, typiquement une mémoire morte. L'objet comprend encore une mémoire vive 32 dont le contenu peut être modifié en cours de fonctionnement de l'objet.

En fonction de son affectation comme transmetteur d'ordres ou comme émetteur d'ordres, la source de puissance alimentant l'objet peut varier; typiquement, un transmetteur d'ordres est un dispositif portable, alimenté par une pile ou batterie; un récepteur d'ordres est relié à un opérateur et peut donc être alimenté par le secteur.

Un transmetteur d'ordres et un émetteur d'ordres peuvent aussi différer par le programme d'exploitation stocké dans la mémoire 30 - dans la mesure où il est avantageux, pour limiter la taille de la mémoire 30, de différencier les objets en chargeant dans la mémoire un programme d'exploitation qui n'est conçu que pour les seules fonctionnalités de transmetteur d'ordres (ou de récepteur d'ordres).

L'identifiant de l'objet peut être stocké dans la mémoire morte 30, ou encore peut être stocké dans la mémoire 32, s'il est généré aléatoirement ou autrement.

On n'a pas représenté à la figure les moyens qui permettent à un objet de réagir à une commande de l'utilisateur : il peut s'agir, pour un transmetteur d'ordres comme pour un récepteur d'ordres, de boutons, contacts, commutateurs ou autres. On peut aussi prévoir que l'objet est sensible à une ou plusieurs coupures de l'alimentation électrique; ceci est particulièrement avantageux pour un récepteur d'ordres, comme indiqué plus bas. Une telle sensibilité peut être mise en oeuvre en détectant les variations de l'alimentation électrique - coupure, mise sous tension, variations de tension, etc.

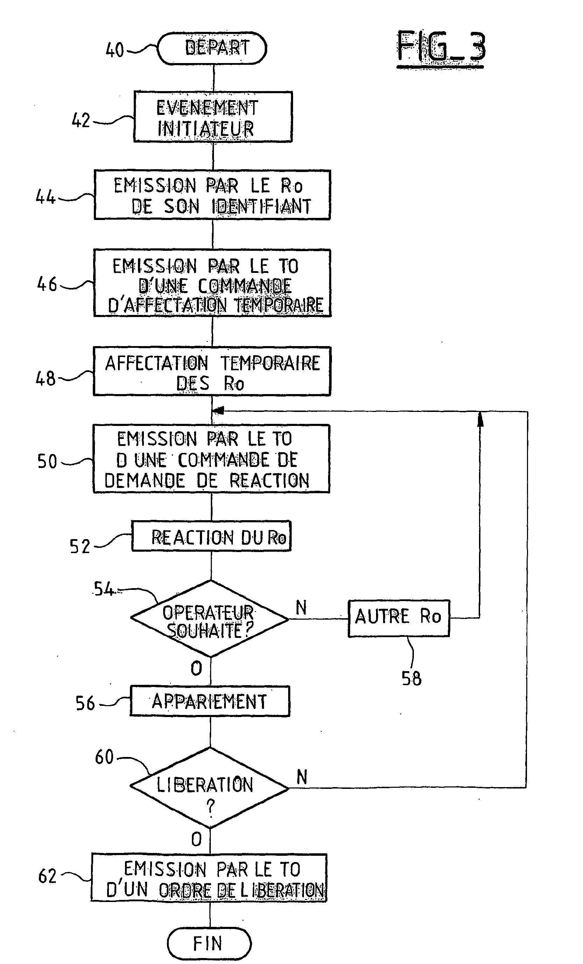

La figure 3 est un ordinogramme d'un procédé d'appariement, tel que celui décrit dans la demande "Procédé d'appariement d'objets bidirectionnels". On détaille plus particulièrement dans ce procédé d'appariement les étapes de constitution du groupe selon la présente invention.

On suppose au départ (étape 40) l'existence de plusieurs objets bidirectionnels destinés à fonctionner comme "récepteurs d'ordres" et d'un objet bidirectionnel utilisé comme transmetteur d'ordres.

A l'étape 42, un événement initiateur est produit par l'utilisateur; il s'agit dans l'exemple d'une commande extérieure - c'est-à-dire qui n'est pas émise par un transmetteur d'ordres Il peut s'agir par exemple d'une action spécifique sur la tension d'alimentation des récepteurs d'ordres, typiquement une double coupure de la tension secteur. Cette solution présente l'avantage d'être simple à mettre en oeuvre, dans la mesure où les récepteurs d'ordres sont généralement reliés au secteur, comme expliqué plus haut. On peut aussi imaginer que l'événement initiateur résulte pour un récepteur d'ordres de l'actionnement d'une commande locale, ou d'une modification locale des branchements électriques; cette solution permet notamment un nouvel appariement d'un récepteur d'ordres, même s'il a auparavant été apparié. Dans tous les cas, l'événement initiateur est perçu par les récepteurs d'ordres.

On pourrait aussi utiliser comme événement initiateur la réception d'une commande émise par un transmetteur d'ordres; cette solution pourrait permettre d'apparier un récepteur d'ordres parmi l'ensemble de ceux qui sont susceptibles de recevoir la commande en cause. Cette solution présente l'avantage de la simplicité, mais l'inconvénient de ne pas permettre de sélectionner les récepteurs d'ordres - sauf à supposer qu'ils sont déjà appariés à un transmetteur d'ordres particulier. On pourrait aussi utiliser comme événement initiateur la combinaison d'une commande extérieure et d'une commande émise par un transmetteur d'ordres; la commande extérieure - par exemple une action locale sur le récepteur - permet de sélectionner les récepteurs d'ordres devant répondre; la commande émise par le transmetteur d'ordres permet un synchronisme qui peut être utile, comme décrit plus bas.

Il est encore avantageux d'utiliser un événement initiateur différent suivant l'état du récepteur - apparié ou non. De préférence, pour un récepteur qui n'est pas apparié, l'événement initiateur n'est pas un simple message. Ceci permet de sélectionner, par une action sur l'alimentation ou par une action sur le récepteur, les différents récepteurs. Pour un récepteur qui est déjà apparié, il est possible d'utiliser comme événement initiateur un simple message : en effet, le récepteur étant déjà apparié, son identité est déjà connue et il est possible d'adresser comme événement initiateur un message à tous les récepteurs du groupe, ou à certains d'entre eux. On pourrait aussi prévoir un événement initiateur constitué
- d'un premier message, destiné à un récepteur particulier identifié, ou à plusieurs récepteurs d'un groupe, identifiés, demandant aux récepteurs d'attendre un événement initiateur;
- d'un deuxième message, qui ne présenterait pas nécessairement de destinataire, qui constituerait un événement synchrone pour tous les récepteurs.
Cette solution permet de sélectionner les récepteurs auxquels est appliqué de façon synchrone l'événement initiateur.

A titre d'exemple, on suppose une installation présentant une commande générale - c'est-à-dire un transmetteur d'ordres apparié à tous les récepteurs d'ordres. Pour constituer un sous-groupe parmi les récepteurs d'ordres - par exemple pour la commande de l'ensemble des récepteurs d'une même pièce ou d'un même type - on envoie successivement à tous les récepteurs concernés un premier message, puis on envoie à tous les récepteurs du groupe un deuxième message. Seuls les récepteurs ayant reçu le premier message réagissent à l'événement synchrone que constitue le deuxième message. A réception de l'identifiant de groupe, ces récepteurs concernés peuvent alors enregistrer l'identifiant de groupe.

A l'étape 44, en réponse à l'événement initiateur, un récepteur d'ordres devant être apparié émet un signal représentatif de son identifiant et d'une indication qu'il est disponible pour appariement. Comme on vient de le mentionner, il peut s'agir de récepteurs d'ordres qui n'ont jamais auparavant été appariés; il peut aussi s'agir de récepteurs d'ordres qui ont déjà été appariés et que l'on souhaite de nouveau apparier. Le signal émis est dans le cas le plus simple constitué de l'identifiant du récepteur d'ordres et d'un code spécifique signalant qu'il est disponible pour appariement; on peut aussi prévoir de n'émettre que l'identifiant du récepteur, sous un format spécifique.

Cette émission peut être répétée, à intervalles réguliers ou aléatoires, pendant une durée prédéterminée - par exemple 2 à 3 minutes. Si plusieurs récepteurs d'ordres émettent - ce qui est l'hypothèse la plus probable - les règles classiques de détection de collision et de répétition sont utilisables pendant l'émission. La durée prédéterminée peut être sélectionnée en fonction des règles de détection de collision ou de répétition, et du nombre maximal admissible de récepteurs d'ordres émettant lors de cette étape.

A l'issue de cette étape, le ou les récepteurs d'ordres ayant reçu l'événement initiateur ont émis leur identifiant; de la sorte, un "auditeur" des signaux émis sait quels récepteurs d'ordres ont réagi à l'événement initiateur; un transmetteur d'ordres actif pendant l'étape 44 peut donc constituer une liste des récepteurs d'ordres ayant émis pendant cette étape. De même, tout objet bidirectionnel peut constituer une liste des récepteurs d'ordres ayant émis leur identifiant, pour constituer le groupe. Un récepteur d'ordres ayant subi l'événement initiateur peut donc enregistrer les identifiants des autres récepteurs d'ordres, et ainsi connaître le groupe formé des différents récepteurs d'ordres ayant subi l'événement initiateur.

La suite du procédé de la figure 3 montre l'utilisation du groupe pour l'appariement; dans la mesure où elle ne constitue qu'un exemple d'utilisation du groupe, elle n'est décrite que sommairement.

A l'étape 46, un transmetteur d'ordres est activé et émet un signal représentatif de son identifiant et d'une commande d'affectation temporaire.

A l'étape 48, les récepteurs d'ordres ayant transmis leur identifiant à l'étape 44 enregistrent l'identifiant du transmetteur d'ordres, dans une mémoire. Pendant une durée prédéterminée, ces récepteurs d'ordres refuseront d'obéir à toute commande ne provenant pas de ce transmetteur d'ordres Ces récepteurs sont donc affectés temporairement au transmetteur d'ordres ayant émis la commande d'affectation temporaire à l'étape 46.

La durée prédéterminée d'affectation temporaire a pour fonction de permettre l'appariement d'un transmetteur d'ordres et d'un récepteur d'ordres; elle peut être fixe - et dans ce cas, les récepteurs d'ordres repassent en fonctionnement normal à l'expiration de cette durée. Il est aussi possible, comme expliqué plus bas, que l'affectation temporaire ne cesse qu'à l'émission par le transmetteur d'ordres d'une commande de libération ou de fin d'affectation temporaire.

A l'issue de cette étape 48, le ou les récepteurs d'ordres s'étant identifié(s) à l'étape 44 et ayant reçu une commande d'affectation temporaire à l'étape 46 n'obéit (n'obéissent) plus qu'aux commandes reçues du transmetteur d'ordres; le transmetteur d'ordres ayant transmis la commande d'affectation temporaire dispose, quant à lui, d'une liste des récepteurs d'ordres Il devient ainsi possible de procéder à l'appariement, ou à toute autre manipulation impliquant le transmetteur et les récepteurs, indépendamment de l'environnement radio.

A l'étape 50, le transmetteur d'ordres émet un signal représentatif de son identifiant et d'une commande de demande de réaction, à destination d'un récepteur de la liste - par exemple le premier de la liste. La demande de réaction a pour fonction de permettre à l'utilisateur de déterminer visuellement, phoniquement ou par toute autre méthode, le récepteur adressé.

A l'étape 52, à réception de la commande de demande de réaction, le récepteur concerné réagit par un signal. Ce signal est constitué par exemple par la commande brève de l'opérateur piloté par le récepteur concerné; un tel signal permet à l'utilisateur d'identifier le récepteur.

A l'étape 54, l'utilisateur détermine si le signal émis à l'étape 52 provient ou non de l'opérateur désiré. Si c'est le cas, on passe à l'étape 56, et sinon, on passe à l'étape 58.

A l'étape 58, on passe à un autre récepteur de la liste - par exemple le récepteur suivant. Ceci correspond à un balayage séquentiel de la liste; on peut aussi procéder à un balayage aléatoire de la liste. On repasse ensuite à l'étape 50, pour émettre une nouvelle commande de demande de réaction à l'attention de cet autre récepteur. Pour passer à un autre récepteur, on peut utiliser à nouveau la même commande du transmetteur d'ordres.

A l'étape 56, le récepteur à apparier a répondu à la commande de demande de réaction. Il est alors possible de procéder à l'appariement proprement dit; celui-ci peut s'effectuer à l'aide du transmetteur d'ordres affecté temporairement, en émettant vers le récepteur d'ordres qui vient de réagir un signal représentatif de l'identifiant du transmetteur à apparier - qu'il s'agisse du transmetteur d'ordres affecté temporairement ou d'un autre.

Le récepteur d'ordres qui reçoit le message d'appariement stocke dans une mémoire l'identifiant du transmetteur d'ordres reçu dans le message d'appariement, de sorte à pouvoir ensuite répondre aux commandes qu'il reçoit de sa part. Il passe dans un état apparié, dans lequel il ne répond plus à un événement initiateur tel qu'une double coupure secteur, mais simplement à un événement initiateur particulier - une action locale ou encore une commande de ré-appariement provenant du transmetteur d'ordres auquel il est apparié.

A l'issue de l'étape d'appariement 56, un transmetteur d'ordres est apparié au récepteur d'ordres ayant réagi en dernier à la commande de demande de réaction. Aux étapes 60 et 62, on procède le cas échéant à la libération des autres récepteurs affectés temporairement. Comme expliqué plus haut, ces étapes ne sont pas indispensables : on peut programmer les récepteurs de sorte à ce que l'affectation temporaire cesse après une durée fixe; on peut aussi faire cesser l'affectation temporaire à réception d'une commande d'appariement, même destinée à un autre récepteur d'ordres.

Il est toutefois avantageux de fournir la possibilité à l'utilisateur de poursuivre l'appariement des récepteurs de la liste autres que celui qui vient d'être apparié. Ceci évité de devoir émettre à nouveau l'événement initiateur pour apparier les autres récepteurs. A l'étape 60, on teste si l'utilisateur désire libérer les autres récepteurs. Si tel est le cas, on passe à l'étape 62 où l'on émet un ordre de libération; sinon, on repasse à l'étape 50, pour l'émission d'une nouvelle commande de demande de réaction; les étapes 60 et 62 peuvent être implicites; ainsi, si le transmetteur d'ordres est utilisé comme console de programmation, le test de l'étape 60 peut simplement consister à vérifier si l'utilisateur active de nouveau le bouton d'envoi d'une commande de demande de réaction - ce qui fait directement passer à l'étape 50. En l'absence d'une telle commande de demande de réaction, on passerait à l'étape 62, à moins que la libération ne soit implicite après l'écoulement d'une durée fixe. On peut aussi imaginer, à l'inverse, que l'on émet à l'étape 62 un nouvel événement initiateur, sous forme d'une commande spécifique à destination des récepteurs de la liste non encore appariés.

Le procédé décrit à la figure 3 permet un appariement sûr, indépendamment de l'environnement radio. Dans l'exemple de la figure 3, le groupe n'est en fait utilisé que par le transmetteur d'ordres qui procède à l'appariement : de ce fait, dans cette application, il n'est pas utile de stocker le groupe dans les différents récepteurs d'ordres.

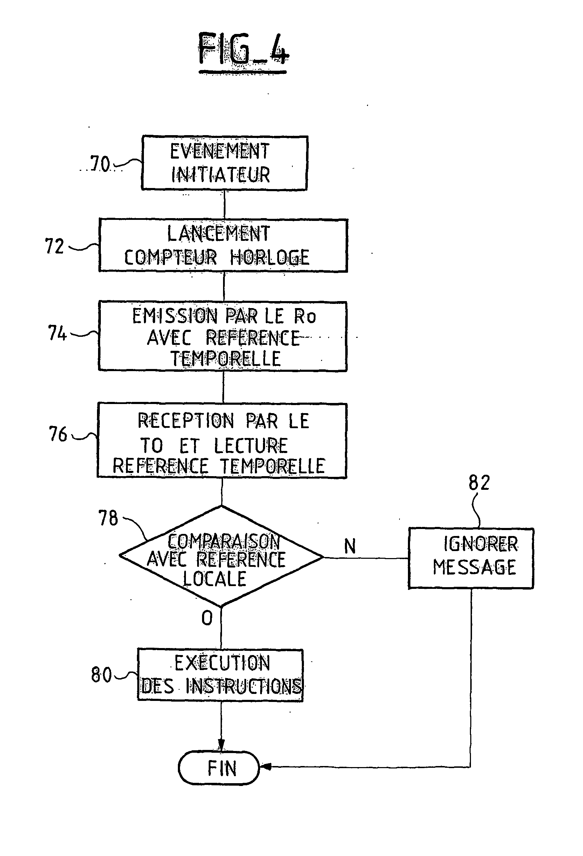

La figure 4 montre un autre exemple de constitution de groupe, selon un autre mode de réalisation de l'invention. Le procédé de la figure 4 permet de sécuriser encore davantage la formation du groupe et d'éviter, dans une installation complexe, ou voisine d'une installation complexe, tout chevauchement d'objets susceptibles d'être appariés bien que n'appartenant pas à un même ensemble. Ce procédé permet de définir avec une plus grande sûreté le groupe.

Le procédé de la figure 4 repose sur le caractère synchrone de l'événement initiateur; il propose d'utiliser cet événement comme référence temporelle; cette référence permet à un récepteur d'ordres ayant reçu l'événement initiateur d'être identifié à l'aide de son temps local, mesuré par rapport à cette référence temporelle. Il suffit alors de prévoir qu'une commande ou une réponse émise par un récepteur d'ordres est accompagnée d'une indication du temps local, comme décrit maintenant.

L'étape 70 est celle à laquelle se produit l'événement initiateur synchrone; comme expliqué plus haut, il peut s'agir d'une commande extérieure - dans l'exemple une action particulière sur le secteur. Il peut aussi s'agir d'une combinaison d'une commande extérieure et d'une commande reçue depuis un transmetteur d'ordres, comme expliqué plus haut, ou d'une commande reçue depuis un transmetteur d'ordres.

A l'étape 72, chaque récepteur d'ordres ayant perçu l'événement initiateur lance un compteur horloge.

A l'étape 74, un récepteur d'ordres émet un signal; il peut s'agir du signal de l'étape 44 de la figure 3, ou de tout autre signal émis ultérieurement par le récepteur d'ordres; ce signal comprend, outre l'identifiant du récepteur d'ordres ou des commandes, une indication du compteur horloge. De la sorte, le signal émis par le récepteur d'ordres est daté par rapport à la référence temporelle que constitue l'événement initiateur.

A l'étape 76, le signal émis à l'étape 74 est reçu par l'objet auquel il est destiné - par exemple le transmetteur d'ordres Celui-ci dispose ainsi de l'indication du compteur horloge. A l'étape 78, cette indication temporelle est comparée à une indication calculée localement dans le transmetteur d'ordres; cette indication peut résulter d'une comparaison avec les indications temporelles reçues de la part des autres récepteurs d'ordres. Elle peut aussi résulter d'un compteur d'horloge du transmetteur d'ordres - notamment si celui-ci est à l'origine de l'événement initiateur.

Si l'indication temporelle du signal reçu est cohérente, on passe à l'étape 80, dans laquelle les instructions ou commandes émises par le récepteur d'ordres sont traitées; inversement, si l'indication temporelle n'est pas cohérente avec l'indication calculée localement, on passe à l'étape 82. A l'étape 82, on a déterminé que le signal émis à l'étape 76 n'est pas cohérente, et que le signal reçu à l'étape 76 ne provient pas d'un récepteur d'ordres ayant subi l'événement initiateur. On ignore le message ou les instructions reçues.

Le procédé de la figure 4 permet donc d'identifier avec une sûreté plus grande l'origine d'un message; il permet de sécuriser la constitution de groupes à l'aide d'un événement initiateur.

Des variantes au procédé décrit à la figure 4 sont possibles. Ainsi, si le transmetteur d'ordres n'est pas lui-même en mesure de percevoir l'événement initiateur - par exemple par ce que le transmetteur d'ordres est un objet nomade, non relié au secteur - il peut néanmoins enclencher son propre compteur de temps au moment de sa première activation. Les valeurs de compteurs relevés dans chaque trame sont alors diminuées de la valeur du compteur du transmetteur d'ordres avant d'être enregistrées avec tous les identifiants des récepteurs d'ordres lors de la capture. En fin de phase capture, ces valeurs sont toutes comparées, et celles s'écartant sensiblement de la valeur moyenne correspondent à des identifiants qui ne seront pas pris en compte.

On peut aussi changer la façon de coder la référence temporelle. Ainsi, si les différents objets sont munis d'une horloge interne - par exemple pour permettre une programmation horaire par l'utilisateur - ils peuvent non pas lancer un compteur, mais simplement noter la date et/ou l'heure de l'événement initiateur. Cette date et/ou cette heure peut ensuite être émise dans un message.

Le test de cohérence de l'étape 78 dépend de la précision souhaitée et de la dérive des compteurs. Pour des horloges telles que celles couramment utilisées dans les volets roulants, présentant une dérive de l'ordre de 300 ms/heure, on peut considérer que les objets ayant reçu un même événement initiateur doivent répondre avec une indication temporelle égale à 10 ms près. Ceci permet de différencier des événements initiateurs séparés de moins de 100 ms, et rend extrêmement improbable en pratique toute confusion entre deux groupes d'objets.

Dans l'exemple de la figure 4, on a décrit l'insertion d'une indication temporelle dans les messages émis par les récepteurs d'ordres à l'attention d'un transmetteur d'ordres. Le procédé de la figure 4 est donc appliqué à l'exemple de la figure 3. On comprend toutefois que la définition d'un groupe parmi les récepteurs d'ordres, expliquée en référence à la figure 4, peut être mise en oeuvre à d'autres fins que l'appariement décrit en référence à la figure 3. Dans le cas des opérateurs domotiques, le procédé de la figure 4 peut être mise en oeuvre pour la définition d'une commande générale, pour une programmation centralisée de tous les récepteurs ou d'une partie de ceux-ci. Plus généralement, le procédé de la figure 4 peut être utilisé pour toute démarche sur les objets d'un groupe - le groupe étant défini par l'événement initiateur.

Par rapport à la solution décrite à la figure 3, la solution de la figure 4 assure une meilleure sûreté, même si des démarches distinctes de programmation sont mises en oeuvre sur des objets - ce qui peut notamment être le cas si des opérateurs sont simultanément programmés dans des appartements voisins.

Dans l'exemple de la figure 4, les différents objets émettent tous des messages : ceci est utile dans la mesure où les différents objets agissent comme récepteurs d'ordres, et transmettent pour l'appariement leur identifiant vers le transmetteur d'ordres; pour constituer un groupe, cette solution ne s'impose pas : il suffit qu'un seul objet fournisse aux autres une indication temporelle pour que les autres objets puissent déterminer s'ils appartiennent ou non au même groupe que celui qui a fourni l'indication. On pourrait ainsi susciter la génération de la liste des objets d'un groupe en envoyant à l'aide d'un objet une commande avec une indication temporelle; les autres objets ayant la même indication temporelle pourraient alors se déclarer. Cette solution limite les échanges dans la mesure où seuls les membres du groupe s'annoncent.

La solution de la figure 4 s'implémente en programmant simplement les récepteurs d'ordres pour émettre une référence temporelle, dans un ou dans tous les messages.

La figure 5 montre encore un autre mode de réalisation de l'invention. L'étape 90 correspond à l'événement initiateur; les remarques faites plus haut s'appliquent encore.

A l'étape 92, un message contenant un identifiant de groupe est émis. Le message peut être émis par un des membres du groupe ou par d'autres moyens. Si le message est émis par un membre du groupe, on peut prévoir que l'événement initiateur provoque l'émission du message et que l'on utilise des mécanismes de détection de collision, pour assurer qu'au moins un message est émis sans collision. On peut aussi prévoir que le message est émis par un membre du groupe, sur action d'un utilisateur - excitation locale du membre du groupe considéré, ou encore réception d'un ordre par le membre du groupe considéré. Le message peut aussi être émis par un objet qui n'est pas membre du groupe.

Le message de l'étape 92 contient un identifiant de groupe. Il peut s'agir d'une référence temporelle, mais plus généralement de tout autre identifiant de groupe. Par exemple, on pourrait utiliser comme identifiant de groupe un nombre aléatoire généré par l'objet qui émet le message de l'étape 92. On pourrait aussi utiliser comme identifiant de groupe l'identifiant de l'objet qui émet le message de l'étape 92.

A l'étape 94, les objets qui ont
- subi l'événement initiateur et
- reçu le message de l'étape 92
enregistrent l'identifiant de groupe reçu lors de l'étape 92. Ils se considèrent alors comme faisant partie du groupe défini par l'identifiant de groupe enregistré.

Le groupe ainsi défini peut être utilisé à des fins d'appariement, comme expliqué plus haut. On peut aussi l'utiliser à d'autres fins, par exemple pour la définition d'une commande générale. Une telle définition de commande générale peut s'effectuer très simplement, et non plus comme dans l'état de la technique en appariant successivement un transmetteur d'ordres à chacun des récepteurs d'ordres.

On peut prévoir que l'enregistrement de l'étape 94 ne s'effectue que si le message à l'étape 92 est reçu dans une plage de temps déterminée à la suite de l'événement initiateur. Ceci limite les risques de perturbation dans la constitution du groupe. Par exemple, on pourrait prévoir :
- l'émission d'un message avec un identifiant de groupe par tous les objets ayant subi l'événement initiateur; et
- l'enregistrement par les objets ayant subi l'événement initiateur du premier identifiant de groupe reçu.
Une telle séquence permet la constitution du groupe en quelques dizaines de millisecondes, ce qui limite tout risque d'interférences avec d'autres installations.

Pour limiter les risques de collision, on peut prévoir dans un objet un tirage aléatoire de l'instant d'émission du message avec l'identifiant de groupe. Par exemple, à supposer des groupes de 20 objets, on définit 20 plages temporelles d'émission de message, chaque plage ayant une durée de 10 ms. Un objet subissant l'événement initiateur tire aléatoirement une plage temporelle et émet un message avec un identifiant de groupe dans cette plage temporelle, à moins qu'il n'ait reçu correctement dans une plage temporelle précédente un message d'identifiant de groupe.

On ne détaille pas la mise en oeuvre par programmation des différentes étapes proposées, qui est à la portée de l'homme du métier utilisant les techniques de programmation connues en tant que telles.

Bien entendu, l'invention n'est pas limitée aux modes de réalisation donnés plus haut. La transmission radio utilisée entre un transmetteur et un récepteur n'est donnée qu'à titre d'exemple et peut être modifiée. L'invention s'applique notamment, que les transmetteurs et les récepteurs utilisent une fréquence unique ou émettent chacun sur une fréquence distincte, ou par sauts de fréquences, ou avec des modulations différentes. En fait, le procédé s'applique dès lors que les transmetteurs ou récepteurs d'ordres sont des "objets bidirectionnels" capables d'émettre et de recevoir.

On a utilisé les mots "récepteurs d'ordres" et "opérateurs", qui s'appliquent notamment à l'exemple des opérateurs de volets roulants. Le récepteur et l'opérateur peuvent être des éléments distincts, comme dans les exemples, ou alors former un ensemble unique - par exemple par intégration du récepteur d'ordres dans l'opérateur.

On peut manifestement coder ou encrypter les messages ou les identifiants, en utilisant les techniques connues de l'état de la technique.

Enfin, les différentes étapes des différents modes de réalisations peuvent être combinées; ainsi, ce qui est dit la référence temporelle à la figure 4 s'applique à l'identifiant de groupe de la figure 5.

## Revendications

1. Un procédé de définition d'un groupe parmi une pluralité d'objets bidirectionnels (4, 10, 14, 16) présentant des capacités d'émission et de réception et agissant comme récepteurs d'ordres ou comme transmetteurs d'ordres dans un système domotique, comprenant les étapes de:
(a) application synchrone (90) d'un événement initiateur à des objets sélectionnés pour définir le groupe, l'application synchrone comprenant une action sur une alimentation électrique commune des objets du groupe ;
(b) envoi (92) d'un message contenant un identifiant de groupe, et
(c) enregistrement (94) par tous les objets ayant subi l'événement initiateur de l'identifiant de groupe.

2. Le procédé selon la revendication 1, **caractérisé en ce que** chaque objet du groupe est muni d'une horloge interne adaptée à noter une indication temporelle comprenant une indication de la date et/ou de l'heure de l'événement initiateur.

3. Le procédé selon la revendication 1, **caractérisé en ce qu'**il comprend le lancement d'un compteur horloge par chaque objet à la perception de l'événement initiateur adapté à fournir une indication temporelle du temps local.

4. Le procédé selon la revendication 2 ou 3, **caractérisé en ce qu'**il comprend l'émission par un objet bidirectionnel d'un signal comprenant l'indication temporelle datant ce signal par rapport à l'événement initiateur.

5. Le procédé selon la revendication 4, **caractérisé en ce que** le signal est reçu par un transmetteur d'ordres disposant ainsi de l'indication temporelle.

6. Le procédé selon la revendication 5, **caractérisé en ce qu'**il comprend une étape de comparaison de l'indication temporelle du signal à une indication calculée localement dans le transmetteur d'ordres ayant reçu le signal.

7. Le procédé selon la revendication 6, **caractérisé en ce que** l'indication temporelle calculée résulte d'une comparaison avec d'autres indications temporelles reçues de la part d'autres objets bidirectionnels.

8. Le procédé selon la revendication 6, **caractérisé en ce que** l'indication calculée résulte d'un compteur d'horloge du transmetteur d'ordres.

9. Le procédé selon l'une des revendications 4 à 8, **caractérisé en ce qu'**il comprend l'émission par tous les objets bidirectionnels agissant comme récepteurs d'ordres d'un signal transmettant leur identifiant vers un transmetteur d'ordres.

10. Le procédé selon l'une des revendications précédentes, **caractérisé en ce qu'**il comprend comme événement initiateur la combinaison d'une commande extérieure et d'une commande émise par un transmetteur d'ordres.

11. Le procédé selon l'une des revendications précédentes, **caractérisé en ce que** l'événement initiateur est différent suivant l'état apparié ou non du récepteur d'ordres.

12. Procédé de constitution d'un groupe à des fins d'appariement utilisant le procédé selon l'une des revendications précédentes.

13. Un objet bidirectionnel agissant comme récepteur d'ordres ou comme transmetteur d'ordres dans un système domotique, présentant:
- un étage de réception (24);
- un étage d'émission (26);
- une unité logique (28) pilotant l'étage de réception (24) et l'étage d'émission (26), et
- une mémoire contenant un programme d'exploitationcomprenant :
(a) une routine de réception d'un événement initiateur apte à détecter des variations de l'alimentation électrique de l'objet;
(b) une routine de réception d'un message et d'extraction d'un identifiant de groupe contenu dans le message, et
(c) une routine d'enregistrement de l'identifiant de groupe.

14. L'objet bidirectionnel selon la revendication 13, comprenant en outre des moyens de détermination d'une indication temporelle et dont le programme d'exploitation comprend en outre une routine d'émission d'un signal comprenant l'indication temporelle.

## Claims

1. A method for defining a group from among a plurality of bidirectional objects (4, 10, 14, 16) having both transmit and receive capacities and whose function is to receive commands or to transmit commands in a home automation system, comprising the following stages:
(a) synchronous application (90) of an initiator event to objects selected to form the group, the synchronous application including an action on a power supply common to the objects in the group;
(b) sending (92) of a message containing a group identifier, and
(c) recording (94) by all the objects that have been subjected to the initiator event of the group identifier.

2. The method of claim 1, **characterised in that** each object of the group is fitted with an internal timer suitable for noting a time indication including an indication of the date and/or the time of the initiator event.

3. The method of claim 1, **characterised in that** it comprises starting a timer by each object upon detection of the initiator event suitable for providing a time indication of the local time.

4. The method according to claim 2 or 3, **characterised in that** it comprises the sending by a bidirectional object of a signal including the time indication, the signal being dated by the time indication with reference to the initiator event.

5. The method of claim 4, wherein the signal is received by a command transmitter which thus has the time indication.

6. The method of claim 5, **characterised in that** it comprises a step of comparing the time indication of the signal to an indication calculated locally in the command transmitter having received the signal.

7. The method of claim 6, wherein the calculated indication results from a comparison with other time indications received from other bidirectional objects.

8. The method of claim 6, wherein the calculated indication comes from a command transmitter timer.

9. The method of any of claims 4-8, **characterised in that** it comprises the sending by all the bidirectional objects acting as command receivers of a signal with their identifier to a command transmitter.

10. The method of any of the preceding claims, **characterised in that** it comprises as initiator event the combination of an external command and a command sent by a command transmitter.

11. The method of any of the preceding claims, wherein the initiator event is different according to the paired or unpaired status of the command receiver.

12. A method for constituting a group for pairing purposes employing the method according to any one of the preceding claims.

13. A bidirectional object acting as a receiver of commands or a transmitter of commands in a home automation system, having:
- a reception stage (24);
- a transmission stage (26);
- a logic unit (28) controlling the reception stage (24) and the transmission stage (28);
- a memory containing an operating programme comprising:
(a) a routine for receiving an initiator event, the routine being capable for detecting the variations in the power supply to the object;
(b) a routine for receiving a message and extracting a group identifier contained in the message, and
(c) a routine for recording the group identifier.

14. The bidirectional object of claim 13, further comprising means for determining a time indication and of which operating programme further comprises a routine for sending the time indication.

## Patentansprüche

1. Verfahren zur Bestimmung einer Gruppe unter mehreren bidirektionalen Objekten (4, 10, 14, 16), die Sende- und Empfangsfähigkeiten aufweisen und als Befehlsempfänger oder als Befehlssender in einem Heimsystem wirken, das die folgenden Schritte umfasst:
(a) synchrone Anwendung (90) eines auslösenden Ereignisses auf zum Bestimmen der Gruppe ausgewählten Objekten, wobei die synchrone Anwendung eine Einwirkung auf eine gemeinsame Stromversorgung der Objekte der Gruppe umfasst;
(b) Sendung (92) einer Nachricht, die eine Gruppenkennung enthält, und
(c) Aufzeichnung (94) der Gruppenkennung durch alle Objekte, die dem auslösenden Ereignis unterzogen wurden.

2. Verfahren nach Anspruch 1, **dadurch gekennzeichnet, dass** jedes Objekt der Gruppe mit einem internen Taktgeber versehen ist, der angepasst ist, eine Zeitangabe festzustellen, die eine Angabe des Datums und/oder der Uhrzeit des auslösenden Ereignisses umfasst.

3. Verfahren nach Anspruch 1, **dadurch gekennzeichnet, dass** es bei der Erkennung des auslösenden Ereignisses den Start eines Zeitzählers durch jedes Objekt umfasst, der angepasst ist, um eine Zeitangabe der Ortszeit zu liefern.

4. Verfahren nach Anspruch 2 oder 3, **dadurch gekennzeichnet, dass** es die Sendung eines Signals umfasst, das die Zeitangabe, die dieses Signal in Bezug auf das auslösende Ereignis datiert, durch ein bidirektionales Objekt umfasst.

5. Verfahren nach Anspruch 4, **dadurch gekennzeichnet, dass** das Signal durch einen Befehlssender empfangen wird, der so über die Zeitangabe verfügt.

6. Verfahren nach Anspruch 5, **dadurch gekennzeichnet, dass** es einen Schritt des Vergleichs der Zeitangabe des Signals mit einer Angabe umfasst, die lokal im Befehlssender, der das Signal empfangen hat, berechnet wird.

7. Verfahren nach Anspruch 6, **dadurch gekennzeichnet, dass** die berechnete Zeitangabe aus einem Vergleich mit anderen, von anderen bidirektionalen Objekten empfangenen Zeitangaben resultiert.

8. Verfahren nach Anspruch 6, **dadurch gekennzeichnet, dass** die berechnete Angabe aus einem Zeitzähler des Befehlssenders resultiert.

9. Verfahren nach einem der Ansprüche 4 bis 8, **dadurch gekennzeichnet, dass** es die Sendung eines Signals durch alle als Befehlsempfänger wirkende bidirektionalen Objekte umfasst, das ihre Kennung an einen Befehlssender sendet.

10. Verfahren nach einem der vorhergehenden Ansprüche, **dadurch gekennzeichnet, dass** es als auslösendes Ereignis die Kombination eines externen Befehls und eines durch einen Befehlssender gesendeten Befehls umfasst.

11. Verfahren nach einem der vorhergehenden Ansprüche, **dadurch gekennzeichnet, dass** das auslösende Ereignis sich gemäß dem gepaarten oder nicht gepaarten Zustand des Befehlsempfängers unterscheidet.

12. Verfahren zur Bildung einer Gruppe zu Zwecken der Paarbildung unter Verwendung des Verfahrens nach einem der vorhergehenden Ansprüche.

13. Bidirektionales Objekt, das als Befehlsempfänger oder als Befehlssender in einem Heimsystem wirkt, das Folgendes umfasst:
- eine Empfangsstufe (24);
- eine Sendestufe (26);
- eine logische Einheit (28), die die Empfangsstufe (24) und die Sendestufe (26) steuert; und
- einen Speicher, der ein Betriebsprogramm enthält, das Folgendes umfasst:
(a) eine Routine zum Empfang eines auslösenden Ereignisses, die geeignet ist, Änderungen der Stromversorgung des Objekts zu ermitteln;
(b) eine Routine zum Empfang einer Nachricht und zur Gewinnung einer in der Nachricht enthaltenen Gruppenkennung,und
(c) eine Routine zur Aufzeichnung der Gruppenkennung.

14. Bidirektionales Objekt nach Anspruch 13, das ferner Mittel zur Bestimmung einer Zeitangabe umfasst und dessen Betriebsprogramm ferner eine Routine zum Senden eines Signals umfasst, das die Zeitangabe umfasst.
